Europäisches Patentamt

European Patent Office

Office européen des brevets

(19)

(11) **EP 1 580 686 A2**

(12) **EUROPEAN PATENT APPLICATION**

(43) Date of publication:
28.09.2005 Bulletin 2005/39

(51) Int Cl.⁷: $G06K\ 9/52$, $G06K\ 9/46$

(21) Application number: 05005953.4

(22) Date of filing: 18.03.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: 22.03.2004 KR 2004019395

(71) Applicant: **LG ELECTRONICS INC.**
**Seoul (KR)**

(72) Inventor: **Lee, Hoon Jai**
**Seoul (KR)**

(74) Representative: **Rupprecht, Kay et al**
**Meissner, Bolte & PartnerGbR**
**Postfach 10 26 05**
**86016 Augsburg (DE)**

(54) **Fingerprint recognition system and method**

(57)    A fingerprint recognition method in accordance with one embodiment of the invention comprises capturing a fingerprint image; defining the fingerprint image by pre-processing the image; extracting fingerprint information from the fingerprint image, the fingerprint information comprising fingerprint information captured by way of radon transformation; and performing an authentication process using the fingerprint information.

Fig. 2

```
                    ┌─────────┐
                    │  START  │
                    └────┬────┘
                         ↓
         ┌──────────────────────────────────┐
         │    CAPTURE FINGERPRINT IMAGE      │──── S1
         └────────────────┬─────────────────┘
                          ↓
    ┌────────────────────────────────────────────┐
    │ PERFORM BINARY CODING FOR FINGERPRINT IMAGE │──── S2
    └──────────────────────┬─────────────────────┘
                           ↓
         ┌──────────────────────────────────┐
         │     NORMALIZE FINGERPRINT IMAGE   │──── S3
         └────────────────┬─────────────────┘
                          ↓
         ┌──────────────────────────────────┐
         │  DETERMINE ORIENTATION OF         │
         │  FINGERPRINT IMAGE AND DEFINE     │──── S4
         │  FINGERPRINT IMAGE                │
         └────────────────┬─────────────────┘
                          ↓
         ┌──────────────────────────────────┐
         │       THIN FINGERPRINT IMAGE      │──── S5
         └────────────────┬─────────────────┘
                          ↓
         ┌──────────────────────────────────┐
         │  EXTRACT FEATURE POINT SUCH AS    │
         │  ENDING AND BIFURCATION POINTS    │──── S6
         └────────────────┬─────────────────┘
                          ↓
         ┌──────────────────────────────────┐
         │  EXTRACT FEATURE VECTOR VALUE BY  │
         │     RADON TRASFORMATION           │──── S7
         └────────────────┬─────────────────┘
                          ↓
         ┌──────────────────────────────────┐
         │ DETERMINE COINCIDENCE OF          │
         │ FINGERPRINT IMAGE WITH THAT       │──── S8
         │ SOTRED IN DATABASE                │
         └────────────────┬─────────────────┘
                          ↓
                    ┌─────────┐
                    │   END   │
                    └─────────┘
```

**Description**

## BACKGROUND OF THE INVENTION

### Field of the Invention

The present invention relates to a fingerprint recognition system and method. In particular, the present invention relates to a fingerprint recognition system and method that can perform the fingerprint recognition without being affected by a geometrical variation such as rotation of a fingerprint image, scaling of the fingerprint, translation of a fingerprint inputting location or noise signals that may be generated during the fingerprinting inputting process. Furthermore, the present invention relates to a fingerprint recognition system and method that can perform the fingerprint recognition using higher order spectra (HOS) in accordance with a radon frequency transformation.

### Description of the Related Art

As personal information security is becoming increasingly important, all eyes in the personal information security field have been centered upon biometric recognition technology that uses either a fingerprint, a retina, an iris, a face, and the like. In particular, the biometric technology using the fingerprint is regarded as the most efficient recognition technology since all people have a unique fingerprint and it has relatively high reliability, stability, and process speed compared with other biometric technologies.

A fingerprint authentication method applied to a prior fingerprint recognition system will be briefly described hereinafter. First, a fingerprint information vector is constructed using information such as the absolute or relative location of features and where an angle may be defined by a bifurcation point and an end point extracted from an inputted fingerprint image. Then, it may be determined if the inputted fingerprint image is identical to a fingerprint image stored in a database.

However, when a user provides a fingerprint for authentication, it may be impossible to perform the fingerprint input with a scale, a rotational angle and a location that are identical to those of a registered fingerprint. This may result in a recognition error and the rejection of an authorized fingerprint or the acceptance of an unauthorized fingerprint.

In order to solve this problem, a technology is needed that can perform the fingerprint recognition without being affected by a geometrical variation such as rotation of a fingerprint image, a scaling of the fingerprint, translation of a fingerprint inputted location or a noise signal that may be generated during the fingerprinting inputting process.

## SUMMARY OF THE INVENTION

A fingerprint recognition method in accordance with one embodiment of the invention comprises capturing a fingerprint image; defining the fingerprint image by pre-processing the image; extracting fingerprint information from the fingerprint image, the fingerprint information comprising fingerprint information captured by way of radon transformation; and performing an authentication process using the fingerprint information.

The fingerprint information comprises a vector value determined based on the radon transformation. In one embodiment, fingerprint information comprises location of at least one of an endpoint and a bifurcation point of a ridge and an angle of the endpoint and bifurcation point. The defining the fingerprint image comprises binary coding the fingerprint image, normalizing the fingerprint image, determining the fingerprint image's orientation, and a thinning the fingerprint image.

In certain embodiments, the fingerprint orientation-determining and defining process is performed using an orientation filter. The thinning process is performed such that a thickness of each ridge corresponds to approximately 1-pixel, for example. When the fingerprint image by the radon transformation is captured, higher-order spectra of the radon transformation is used. The higher-order spectra is a bispectrum that is third-order spectra of the radon transformation.

In accordance with one aspect of the invention, when coincidence measure for the fingerprint information is higher than a threshold value, the authentication process is successful. The fingerprint information is used as global based information in certain embodiments.

The authentication process comprises at least one of performing a comparison of measured coincidences of the global based information extracted by the radon transformation and measuring a coincidence rate based on location and angle of a ridge of the fingerprint image with predetermined values.

In accordance with another embodiment, a fingerprint recognition method comprises transforming a two-dimensional fingerprint image into a one-dimensional radon transformation; extracting fingerprint information comprising a vector value P calculated based on the radon transformation; and authenticating a fingerprint when a coincidence measurement rate for the fingerprint information and a stored fingerprint image in a database is higher than a threshold value.

When the coincidence measurement rate is higher than the threshold value, it is determined that the two-dimensional fingerprint image matches the stored fingerprint image in the database. A rotation compensation of the two-dimensional fingerprint image is performed based on the vector value P. The coincidence measurement rate is determined based on the vector value P.

In yet another embodiment, a fingerprint recognition system comprises a fingerprint image capturing unit for capturing a fingerprint image; a comparative value extracting unit for extracting a comparative value for determining at least a coincidence of the fingerprint image with a stored fingerprint image; and a fingerprint image coincidence determining unit for determining the coincident rate of the fingerprint image based on the comparative value, wherein the comparative value comprises a vector value extracted from a frequency area of a radon transformation.

The comparative value comprises at least one of a location value and an angle value for each ridge in the fingerprint image. The vector value comprises at least a rotation degree of the fingerprint image. The fingerprint image coincidence determining unit determines the authentication based on the coincident rate.

## BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram of a fingerprint recognition system according to an embodiment of the present invention.

FIG. 2 is a flowchart illustrating a fingerprint recognition method according to an embodiment of the present invention.

Reference will now be made in detail to the preferred embodiments of the present invention, examples of which are illustrated in the accompanying drawings. Wherever possible, the same reference numbers will be used throughout the drawings to refer to the same or like parts.

## DETAILED DESCRIPTION OF THE INVENTION

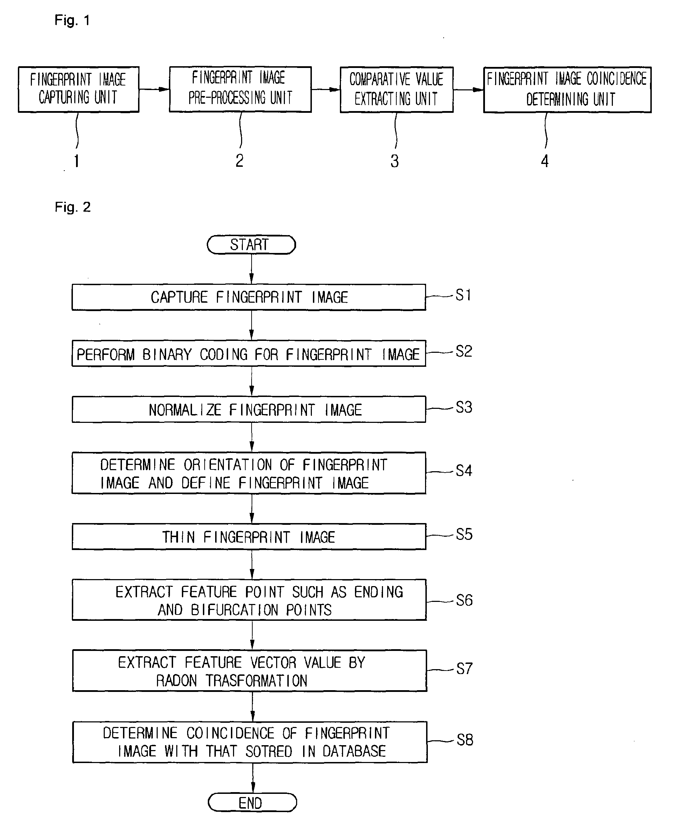

Referring to FIG. 1, the fingerprint recognition system comprises a fingerprint image capturing unit 1, a fingerprint image processing unit 2 for pre-processing the fingerprint image captured in the fingerprint image capturing unit 1 as an image suitable for recognition, a comparative value extracting unit 3 for extracting any features from which a compared value may be derived from the pre-processed fingerprint image, and a fingerprint image matching unit 4 for determining an acceptable authentication by comparing the values of the features extracted from the comparative value extracting unit 3 with stored feature values in a database.

In one embodiment of the invention, the fingerprint image capturing unit 1, may be a sensor that can photograph the fingerprint image as having ridges. In other embodiments, the fingerprint image pre-processing unit 2 may, for example, comprise one or more of the following either alone or in combination: a binary coding units for defining the fingerprint image in a binary code, a fingerprint image normalizing unit, a fingerprint image thinning unit or similar devices to better define the captured fingerprint image.

In a preferred embodiment of the invention, the comparative value extracting unit 3 extracts fingerprint information using features having an absolute or relative location on the fingerprint. Such features comprise, for example, a bifurcation point, an end point, angles defined by a bifurcation point and an end point, and a vector value formed by a radon transformation of the fingerprint image. By using the vector value formed by the radon transformation as the fingerprint information, the fingerprint recognition can be more accurately realized even when the fingerprint image is unstably inputted by the fingerprint recognition system installed on a mobile terminal.

The radon transformation has a characteristic in which identical values are produced for identical fingerprint images regardless of the rotation, scale, translation, and noise of the fingerprint image. The structure and operation of the radon transformation will be described later.

The fingerprint image matching unit 4 performs the authentication operation by using the fingerprint information extracted from the comparative value extracting unit 3 and determining if the inputted fingerprint image coincides with a fingerprint image stored in the database.

In the above-described fingerprint recognition system, since the vector value is a comparative value for producing a fingerprint image by a radon transformation method, the fingerprint recognition for authentication can be more accurately realized without being affected by a rotation, a scaling, a translation, or noise produced during the input of a fingerprint image.

The radon transformation is a generalized formation of a convolution operator relating to a curved surface or a curved line. An original image and a radon translated image of a frequency domain can be translated backward or forward. Particularly, a bispectrum that is of a higher-order spectra (i.e., a third-order spectra) is not varied where there is a geometrical variation such as rotation, scaling, or translation.

Therefore, the fingerprint recognition technology using the bispectrum provides a steady result even when there exists a rotation of a fingerprint that may occur during a signal process, a scaling of a fingerprint that may occur by finger press variations, on a locational translation of a fingerprint during its input as well as an occurrence of a noise signal generated during the fingerprint inputting process.

A bispectrum of a one-dimensional deterministic real-valued sequence can be defined by the following equation 1 in accordance with one embodiment of the present invention.

Equation 1

$$B(f1, f2) = X(f1)X(f2)X^*(f1+f2)$$

where, B(f1, f2) is the bispectrum; and X(f) is a discrete-time Fourier transformed value of an x(n) sequence at a normalized frequency.

Based on, by the symmetry property of the Fourier transform, a bispectra range of a signal can be defined by the following equation 2, in accordance with one embodiment of the invention.

Equation 2

$$0 \leq f2 \leq f1 \leq f1 + f2 \leq 1$$

When the radon transformation is used, a two-dimensional fingerprint image can be divided into g(s, θ) that is a N-number-one-dimensional sequence. In one embodiment, the g(s, θ) is the radon transformation sequence of (x, y) that is a two-dimensional image that can be defined by a line integral inclined from a y-axis by an angle θ and spaced away from the origin by a distance s.

As illustrated by the following equation 3, a parameter p(θ) can be represented as a phase of the spectra of the one-dimensional radon transformation g(s,θ) following a line that is f1=f2. This can be also represented $I_P(f,θ)$ that is a two-dimensional discrete Fourier transform.

Equation 3

$$p(\theta) = \measuredangle [\int_{f_1=0+}^{0.5} B(f1,f1)df1]] = \measuredangle [\int_{f_1=0+}^{0.5} I_p^2(f,\theta)I_p^*(2f,\theta)df_1]$$

Referring to Equation 3, a vector value P having a length N can be defined by p=(p(θ1), (p(θ2)···, (p(θN). According to the radon transformation property and the bispectrum parameter p(θ), the vector value P is not varied by the translation, amplification, scaling, or Gaussian noise of a direct current-level (DC-level).

By the above-described radon transformation property, when the matching process is performed by extracting the fingerprint information from the inputted fingerprint image, it becomes possible to extract fingerprint information that is not varied by the geometrical variation that may be inadvertently and naturally occurring during the fingerprint image inputting process.

In addition, the vector value P can be used as the fingerprint information for matching and authentication purposes, in one or more embodiments.

When there is, for example, a rotation of the fingerprint image and its associated vector value P, a cyclic shift is generated. It is possible to easily find the rotation direction and rotation amount of the inputted image from the image stored in the database using, for example, the information from image and the cyclic shift. As a result, the rotation of the inputted image can be compensated for and an inputted finger print can be matched with an identical image stored in the database.

The fingerprint recognition method to which the radon transformation is applied according to an embodiment of the present invention will be described. Referring to FIG. 2, after a fingerprint image is captured (S1), a binary coding process for the captured fingerprint image is performed (S2). In order to define the captured fingerprint image, a fingerprint image normalizing process is performed so that the fingerprint image follows a predetermined mean value and distribution (S3).

A fingerprint defining process is performed using an orientation filter in order to define the captured fingerprint image and to extract feature points, thereby determining the orientation of the fingerprint image and defining the fingerprint ridges (S4). A thinning process for allowing each ridge to have a predetermined thickness (e.g., 1-pixel) may be performed (S5) to locate and define feature points such as ending and bifurcation points from the fingerprint image.

In accordance with one aspect of the invention, a feature coincidence determining process for determining if the captured fingerprint image contains features that coincide with the image stored in the database is performed. Accordingly, the feature points, such as the ending and bifurcation points and the fingerprint information are extracted (S6). For example, break ridges and separated ridges may be found out, information on angles defined between the extracted feature points may be determined and matched with respect to coordinate locations and a core point of a fingerprint image. In certain embodiments, the fingerprint information extracted from corresponding feature points of the fingerprint image may be used in the coincidence determining process.

In an exemplary embodiment, a process for extracting fingerprint information relating to the vector value P by the radon transformation is performed (S7). The vector value P is extracted using the value p(θ) obtained from equation 3, for example, and the features extracted from the fingerprint information may be used as global based information in the feature coincidence detection process. The extraction of the fingerprint information relating to the vector value P and the extraction of information relating the ending and bifurcation points of the ridge may be simultaneously realized or realized according to a predetermined order.

In another embodiment, the fingerprint feature coincidences are determined by comparing the fingerprint information stored in the database with the inputted fingerprint information (S8). That is, coincidence points between the inputted fingerprint information and the fingerprint information stored in the database are calculated and summed. When the summed coincidence point is higher than a predetermined threshold value, it is determined that the coincidence is successfully realized.

In one embodiment, when the coincidence measure of the global based information extracted by the radon transformation is greater than a threshold value, then more detailed information of the fingerprint may not be compared. In an exemplary embodiment, if the coincidence of the detailed based information is greater than 70%, then authentication of the fingerprint is successful. The global based information of the fingerprint information can be the vector value P by the radon transformation and the detailed based information can be an absolute or relative feature location relationship of the ending and bifurcation points and the corresponding angles between the ending and bifurcation points.

According to the present invention, the fingerprint recognition can be accurately performed without being affected by a geometrical variation such as rotation of a fingerprint image, a scaling of the fingerprint, translation of an inputted fingerprint location, or a noise signal that may be generated during the fingerprinting inputting process. Therefore, the fingerprint recognition reliability and accuracy can be improved.

It will be apparent to those skilled in the art that various modifications and variations can be made in the present invention. Thus, it is intended that the present invention covers the modifications and variations of this invention provided they come within the scope of the appended claims and their equivalents.

**Claims**

1. A fingerprint recognition method comprising:

   capturing a fingerprint image;
   defining the captured fingerprint image by pre-processing the image;
   extracting fingerprint information from the defined fingerprint image, the fingerprint information including at least fingerprint image by radon transformation; and
   performing an authentication process using the fingerprint information.

2. The fingerprint recognition method according to claim 1, wherein the fingerprint information comprises a location of ending and bifurcation points of a ridge and an angle of the ending and bifurcation points.

3. The fingerprint recognition method according to any one of claims 1 and 2, wherein when the fingerprint image by the radon transformation is extracted, higher-order spectra of the radon transformation are used.

4. The fingerprint recognition method according to claim 3, wherein the higher-order spectra is a bispectrum that is third-order spectra of the radon transformation.

5. The fingerprint recognition method according to any one of claims 1 to 4, wherein when the fingerprint information by the radon transformation is higher than a predetermined value, the authentication is accepted.

6. The fingerprint recognition method according to any one of claims 1 to 5, wherein the performing the authentication process is performed by comparing a coincidence measure of global based information extracted by the radon transformation and/or a coincidence measure of detailed based information extracted by a location and angle of the ridge of the fingerprint image with predetermined values respectively.

7. The fingerprint recognition method according to any one of claims 1 to 6, wherein the fingerprint information by the radon transformation compris4es a vector value P of the radon transformation that is transformed to a frequency domain.

8. The fingerprint recognition method according to claim 7, wherein when the vector value P is higher than a predetermined threshold value, it is determined that an inputted fingerprint is identical to that stored in the database.

9. The fingerprint recognition method according to claim 7, wherein a rotation compensation of the fingerprint image is performed by the vector value P.

Fig. 1

| FINGERPRINT IMAGE CAPTURING UNIT | → | FINGERPRINT IMAGE PRE-PROCESSING UNIT | → | COMPARATIVE VALUE EXTRACTING UNIT | → | FINGERPRINT IMAGE COINCIDENCE DETERMINING UNIT |

1          2         3         4

Fig. 2

START

CAPTURE FINGERPRINT IMAGE —— S1

PERFORM BINARY CODING FOR FINGERPRINT IMAGE —— S2

NORMALIZE FINGERPRINT IMAGE —— S3

DETERMINE ORIENTATION OF FINGERPRINT IMAGE AND DEFINE FINGERPRINT IMAGE —— S4

THIN FINGERPRINT IMAGE —— S5

EXTRACT FEATURE POINT SUCH AS ENDING AND BIFURCATION POINTS —— S6

EXTRACT FEATURE VECTOR VALUE BY RADON TRASFORMATION —— S7

DETERMINE COINCIDENCE OF FINGERPRINT IMAGE WITH THAT SOTRED IN DATABASE —— S8

END